# EUROPÄISCHE PATENTSCHRIFT

(11) **EP 1 634 687 B1**
(45) Veröffentlichungstag und Bekanntmachung des Hinweises auf die Patenterteilung: **18.11.2009**
(21) Anmeldenummer: 05019725.0
(22) Anmeldetag: 10.09.2005
(51) Int. Cl.: B29C 45/16, B29L 31/34, H01R 43/24

(54) **Verfahren zur Herstellung von Hybridbauteilen**
Method for producing hybrid parts
Procédé pour produire des composants électroniques hybrides

(30) Priorität: 13.09.2004 DE 102004044614
(43) Veröffentlichungstag der Anmeldung: 15.03.2006
(73) Patentinhaber: Hans Huonker GmbH, 78052 Villingen-Schwenningen (DE)
(72) Erfinder: Huonker, Hans-Georg, 78052 Villingen-Schwenningen (DE)
(74) Vertreter: Neymeyer, Franz

(56) Entgegenhaltungen:
- EP-A- 0 361 194
- EP-A- 1 357 774
- DE-A1- 2 306 600
- DE-A1- 4 336 820
- US-B1- 6 506 328

## Beschreibung

Die Erfindung betrifft ein Verfahren zur Herstellung eines Hybridbauteiles.

Bei Hybridbauteilen handelt es sich um aus verschiedenen Werkstoffen, insbesondere Metall- und Kunststoff, bestehende Bauteile. Zur Herstellung solcher Bauteile werden beispielsweise vorprofilierte, bandförmige Stanzgitter verwendet, welche von einer Spule mittels einer Haspel abgewickelt werden. Das Stanzgitter gelangt über eine Vorschubeinrichtung in eine kombinierte Biege- und Trennmaschine, die entsprechende Biege- und Trennwerkzeuge aufweist, um ein vorgestanztes und vorgebogenes Blechteil für den Einsatz in einer Spritzgusskavität anzufertigen.

D.h., dass es sich bei dem bandförmigen Stanzgitter um ein Blechband handelt, das vorgestanzte Blechteile enthält, welche später zum fertigen Hybridbauteil umspritzt werden. Die einzelnen Blechteile sind dabei im bandförmigen Stanzgitter hintereinander liegend eingebunden. In der Biege- und Trennmaschine werden einige Biegeoperationen am Bauteil vorgenommen. Das fertig gebogene Bauteil wird durch Stanzen vom bandförmigen Stanzgitter getrennt, so dass das zu umspritzende (Blech-)Bauteil nun als separates Einzelteil vorliegt. Dieses Einzelteil wird nun mittels einer entsprechenden Handhabungseinrichtung beispielsweise einer flexiblen Fertigungsanlage zur Herstellung von Hybridbauteilen übergeben.

Dieses als Blechbauteil ausgebildete Bauteil kann beim fertigen Hybridbauteil beispielsweise die Kontaktelemente einer Steckverbindung, eines Schalters od. dgl. darstellen. Dieses Blechbauteil wird nun beispielsweise einer Horizontalspritzgussmaschine zugeführt und dort auf deren Düsenseite eingelegt. Nach dem Schließen der Spritzgussform wird nun das Blechteil mit Kunststoff umspritzt. Nach dem Umspritzen und Öffnen der Spritzgussform wird das vorgefertigte Hybridbauteil auf der Auswerferseite der Horizontalspritzgussmaschine entnommen. Handelt es sich bei dem Hybridbauteil um einen elektrischen Verbindungsstecker, so müssen in einem weiteren Arbeitsgang die einzelnen nach dem Umspritzen miteinander verbundenen Steckkontakte voneinander getrennt werden. Hierzu wird das Hybridbauteil einer Presse zugeführt, welche mit einem entsprechenden Trennwerkzeug versehen ist.

Die Verbindungsstellen zwischen den Kontakten dienen während des Umspritzens der Stabilisierung der Kontakte, so dass diese auch nach dem Spritzgussvorgang in ihrer gewünschten Position verbleiben. Nach dem Umspritzen müssen diese Verbindungen getrennt werden, so dass die Steckverbindung ihre zugedachte Funktion erfüllen kann. Weiter kann vorgesehen sein, dass das Hybridbauteil in weiteren Prüfstationen auf Spannungsüberschläge geprüft, optisch kontrolliert und elektronisch vermessen wird. Entspricht das Hybridbauteil nach Durchlauf der genannten Arbeitsvorgänge den vorgegebenen Kriterien, so wird das Hybridbauteil in einem letzten Arbeitsgang auf Transportpaletten abgelegt, welche beispielsweise als sogenannte Blisterverpackungen ausgebildet sein können.

Es hat sich nun gezeigt, dass die Herstellung von Hybridbauteilen äußerst schwierig ist, wenn diese zusätzlich elektronischen Bauteile enthalten sollen, welche ebenfalls vom Kunststoff gegen äußere Einflüsse zu schützen sind. Solche elektronischen Bauteile werden beispielsweise in Form von Sensoren für die Motorsteuerung bei Kraftfahrzeugen benötigt. Da diese Elektronikbauteile jedoch gegen äußere Einflüsse, z.B. hohe Temperaturen, Feuchtigkeit oder auch aggressive Flüssigkeiten wie Öl, Bremsflüssigkeit usw. sehr empfindlich sind, müssen diese Elektronikbauteile durch eine entsprechendes Gehäuse geschützt sein.

Zur Herstellung beispielsweise eines solchen Sensors wurde bisher zunächst nach dem oben beschriebenen Verfahren ein sogenannter "Vorspritzling" angefertigt, welcher die von außen zugänglichen Anschlusskontakte sowie im späteren Bauteil innen liegende Anschlusselemente aufweist. Diese Anschlusselemente werden in einem nachfolgenden Arbeitsgang mit einem Elektronikbauteil, beispielsweise mit einer elektronischen Platine, elektrisch kontaktiert. In einem weiteren Arbeitsgang wird nun das elektronische Bauteil mit den Anschlusselementen des Vorspritzlings durch Anbringen entsprechender Lötverbindungen elektrisch kontaktiert und beispielsweise über eine Rastverbindung od. dgl. mit dem Vorspritzling feststehend verbunden. Um nun diese elektronischen Bauteile gegen äußere Einflüsse, insbesondere Feuchtigkeit od. dgl. zu schützen, ist es erforderlich, diese mit einem Schutzgehäuse zu umgeben. Dabei wird das Schutzgehäuse vorab in einem separaten Spritzgussvorgang hergestellt und anschließend auf den Vorspritzling aufgesetzt. Die Abdichtung mit dem Grundkörper des Vorspritzlings kann beispielsweise durch eine Klebverbindung, Schweißverbindung oder in anderer Weise erfolgen.

Dieses Gehäuse umschließt dabei im vormontierten Zustand zumindest einen Teil des Vorspritzlings zusammen mit dem Elektronikbauteil. Da dieses Gehäuse einen Hohlraum um das elektronische Bauteil bildet, kann es notwendig sein, das Gehäuse in einem weiteren Arbeitsgang auszugießen, um beispielsweise die Bildung von Kondenswasser zu verhindern. Dazu weist das Gehäuse zumindest an einer Stelle eine Öffnung auf, durch welche der noch verbleibende Hohlraum zwischen dem Gehäuse und den darin liegenden Bauteilen des Vorspritzlings und dem Elektronikbauteil beispielsweise mit einem Kunstharz ausgegossen wird, so dass insbesondere das Elektronikbauteil durch diese Vergussmasse gegen äußere Witterungseinflüsse geschützt ist. Das zusätzliche Gehäuse ist bei solchen Hybridbauteilen einerseits zur "Umhüllung" des Elektronikbauteils notwendig und verbleibt auch nach dem Vergießen am "Vorspritzling", um auch die mechanischen Eigenschaften gegen äußere mechanische Einflüsse zu verbessern.,

Nach der Herstellung dieses Zwischenproduktes kann dieses in einem weiteren Verfahrensschritt mit dem eigentlichen Montagegehäuse versehen werden, mit welchem das fertige den Sensor enthaltende Hybridbauteil beispielsweise an einem Verbrennungsmotor montiert wird.

Zur Herstellung des Montagegehäuses wird das Zwischenprodukt in einem weiteren Verfahrensschritt in eine weitere Kavität einer Spritzgussmaschine eingebracht und das Montagegehäuse aus einem herkömmlichen, spritzgussfähigen Kunststoff angegossen. Das beschriebene Verfahren ist somit äußerst aufwändig und somit teuer, jedoch bisher notwendig, da die Elektronikbauteile nicht mit einem herkömmlichen spritzgussfähigen Kunststoff umspritzt werden können. Dies ist deshalb nicht möglich, weil beispielsweise die Temperaturen beim Spritzgießen in der Größenordnung von 350° C liegen und bei solch hohen Temperaturen die Elektronikbauteile wie auch die Lötverbindungen während des Spritzgussvorganges Schaden nehmen würden und das Hybridbauteil somit unbrauchbar wäre. Außerdem enthalten herkömmliche, spritzgussfähige Kunststoffe in der Regel abrasive Elemente, so dass auch beispielsweise die Leiterbahnen auf der Oberfläche einer zu umspritzenden Platine beim Umspritzen beschädigt werden können.

Aus der DE-A-2306600 ist ein Verfahren zum Einkapseln eines Bauteils bekannt, bei welchem das Eindringen von Feuchtigkeit zwischen einem Einkapselungsmedium und der Platine einer gedruckten Schaltung verhindert werden soll. Ein solches Eindringen kann dadurch hervorgerufen werden, dass die durch die Abstützung der Platine entstehenden Löcher das Eindringen von Feuchtigkeit zwischen der Einkapselung und der Platine mit der gedruckten Schaltung ermöglichen. Um dies zu verhindern wird ein Teil des Bauteils mit einem thermoplastischen Kleber beschichtet und anschließend das beschichtete Bauteil in einer Einkapselungsform abgestützt und das Einkapselungsmedium unter erhöhter Temperatur in die Form eingeführt. Durch diese Beschichtung wird auf der zu umspritzenden Platine eine Schicht erzeugt, in deren Bereich eine Abstützung erfolgen kann, ohne dass nach Entfernen der Abstützung Löcher entstehen, die bis zur Platine reichen. Weiter soll insbesondere erreicht werden, dass das Einkapselungsmedium durch diese Kleberschicht nicht vom Bauteil abheben kann. Als thermoplastischer Kleber wird ein wärmeaktivierbarer Kleber verwendet, der den Vorteil hat, dass ein Handhaben des Bauteils nach der Kleberbeschichtung, jedoch vor der Einkapselung erleichtert wird. Bei diesem Verfahren muss also der für die Beschichtung verwendete Kleber zunächst einmal aushärten, bevor die Platine "fertig" umspritzt werden kann. Das bedingt, dass das Bauteil zunächst bis zu Aushärtung des Kleber zwischengelagert werden muss, was zeitaufwändig und mit zusätzlichen Koten verbunden ist.

Aus der EP-A-0361194 ist ein Verfahren zum zweistufigen Umhüllen eines über Bonddrähte mit einer Platine kontaktierten integrierten Schaltkreises bekannt. Dabei soll dieses Verfahren wirtschaftlich und leicht automatisierbar sein, wobei eine Kompensation von Spannungen und unterschiedlichen Dehnungen ermöglicht und auch ein sicherer Schutz gegen innere Korrosion geboten werden soll. Bei diesem Verfahren wir in einem ersten Verfahrensschritt im Bereich des Schaltkreises und dessen Bonddrähte eine elastische Zwischenschicht aus einem thermoplastischen Elastomer durch Spritzgießen, Gießen oder Aufdosieren aufgebracht. Beim Spritzgießen erfolgt die Füllung der Kavität jedoch nicht vollständig und es verbleibt eine gewisse Volumenreserve. Durch diese Volumenreserve kann der Werkzeuginnendruck beim Spritzgießen extrem niedrig bleiben, was bedeutet, dass Verwehungen der Bonddrähte vermieden werden. Ziel dieser Art des Aufbringens des thermoplastischen Elastomers ist es, dass durch die erzeugte elastische Zwischenschicht die mechanisch empfindlichen Bereiche, insbesondere der Chip-Bereich und der angrenzende Anschlussbereich im zweiten Spritzvorgang, bei der Herstellung der eigentlichen Umhüllung geschützt werden.

Das Dokument EP-A-1357774 beschreibt ein Verfahren gemäß dem Oberbegriff des Anspruchs 1.

Demgemäß liegt der Erfindung die Aufgabe zugrunde, ein Hybridbauteil mit elektronischen Bauelementen in einem möglichst kontinuierlich ablaufenden Fertigungsverfahren herzustellen.

Die Aufgabe wird erfindungsgemäß durch die in Patentanspruch 1 angegebenen Verfahrensschritte gelöst.

Durch das erfindungsgemäße Verfahren ist ein Hybridbauteil mit elektronischen Bauelementen in äußerst einfacher Weise und in einem kontinuierlich durchlaufenden Fertigungsprozess herstellbar. Insbesondere können hierzu gemäß Anspruch 3 herkömmliche Spritzgussmaschinen verwendet werden.

Gemäß Anspruch 4 kann eine solche Spritzgussmaschine zur Durchführung der einzelnen aufeinanderfolgenden Spritzgussvorgänge ein Mehrkomponentenwerkzeug aufweisen.

Gemäß Anspruch 1 wird zunächst ein erster Vorspritzling hergestellt. Dieser Vorspritzling besteht zumindest aus einem Metallbauteil sowie einem mit dem Metallbauteil elektrisch kontaktierten Elektronikbauteil. Je nach Ausbildung des zu fertigenden Hybridbauteils kann vorgesehen sein, dass zur Herstellung des Vorspritzlings zunächst das zu umspritzendes Metallbauteil durch Trenn- und Biegebearbeitung hergestellt wird. Anschließend kann dieses in eine Kavität einer Spritzgussform eingebracht werden, wobei das Metallbauteil mit äußeren Anschlusselementen und inneren Anschlusselementen versehen ist. Die äußeren Anschlusselemente sind dabei außerhalb der Kavität der Spritzgussform und die inneren Anschlusselemente innerhalb der Kavität der Spritzgussform angeordnet. Das Metallbauteil wird nun mit einem herkömmlichen, spritzgussfähigen Kunststoff unter Freilassung der inneren Anschlusselemente zur Herstellung des ersten Vorspritzlings umspritzt.

Bei dieser Art der Herstellung des ersten Vorspritzlings wird zunächst eine Art Stütz- oder Aufnahmekörper aus herkömmlichem, spritzgussfähigen Kunststoff für das Elektronikbauteil angespritzt wird. Ein solcher Stützkörper kann bei größeren und aufwändigeren Elektronikbauteilen notwendig sein, um dieses über den zuvor angespritzten Stützkörper in der Kavität einer Spritzgussform beim Umspritzen mit dem Schmelzkleber abstützen zu können. Danach wird dieser erste Vorspritzling mit dem Elektronikbauteil bestückt und dieses mit den inneren Anschlusselementen elektrisch kontaktiert. Anschließend wird der erste Vorspritzling zusammen mit dem Elektronikbauteil in einer zweiten, größeren Kavität zumindest im Bereich des Elektronikbauteils unter Ausbildung einer thermisch isolierenden Pufferzone mit einem Schmelzkleber zu einem einen zweiten Vorspritzling bildenden Zwischenprodukt umspritzt. Nach diesem Spritzgussvorgang wird das Zwischenprodukt zumindest im Bereich des von außen zugänglichen Schmelzklebers mit einem herkömmlichen spritzfähigen Kunststoff umspritzt, welcher einen zumindest den Schmelzkleber schützenden Hüllkörper bildet. Dabei wird der Schmelzkleber durch den Kunststoff während des Spritzgussvorganges im Bereich der Pufferzone angeschmolzen und bildet mit diesem eine Mischzone aus Kunststoff und Schmelzkleber, so dass auch eine absolute Dichtigkeit erreicht wird.

Bei einfacheren Formen eines Hybridbauteils kann dabei der im letzten Verfahrensschritt angespritzte Kunststoff schon das fertige Gehäuse bilden, da bei einfachen Gehäuseformen die zeitliche Dauer der Spritzgussvorganges äußerst kurz ist und somit ein "Ausschmelzen" des Schmelzklebers nicht auftreten kann.

Bei größerer zeitlicher Dauer des Umspritzens des Zwischenproduktes mit herkömmlichem Kunststoff, kann die Pufferzone mit einer entsprechend großen Wandstärke ausgebildet werden und der Anguss beispielsweise in diesen Bereich gelegt werden. Ist dies nicht ausreichend oder ist ein Ausschmelzen des Schmelzklebers auch durch diese Maßnahme nicht auszuschließen, so kann erfindungsgemäß auch vorgesehen sein, dass beim Umspritzen des Zwischenproduktes nur eine Art Hüllkörper mit geringer Wandstärke aus herkömmlichen Kunststoff angespitzt wird. Durch diese Maßnahme wird eine kurze Dauer des Umspritzvorganges erreicht, so dass ein Ausschmelzen des Schmelzklebers sicher verhindert wird. Nachdem der Hüllkörper angespitzt ist, kann nun in einem weiteren Verfahrensschritt das endgültige Gehäuse angespritzt werden. Durch den Hüllkörper wird dabei der Schmelzkleber sowohl thermisch als auch mechanisch geschützt.

Allen Verfahrensabläufen ist gemeinsam, dass die einzelnen Verfahrensschritte in einem kontinuierlichen Fertigungsprozess durchführbar sind. Insbesondere können die aufeinanderfolgenden Spritzgussvorgänge beispielsweise in einer herkömmlichen Spritzgussmaschine mit einem Mehrkomponentenwerkzeug durchgeführt werden, so dass eine vollautomatische Herstellung eines Hybridbauteils durchführbar ist.

An dieser Stelle sei nochmals bemerkt, dass solche Schmelzkleber allgemein bekannt sind und zur Umspritzung von Elektronikbauteilen schon länger verwendet werden. Nachteilig bei diesen spritzfähigen Schmelzklebern ist, dass deren mechanische Eigenschaften häufig den Anforderungen beim späteren Einsatz des Hybridbauteiles nicht genügen. Insbesondere beim Einsatz solcher Hybridbauteile mit Elektronikbauteilen in Kraftfahrzeugen, wie oben schon erwähnt, werden von den Herstellern an solche Hybridbauteile auch diverse mechanische, thermische und auch chemische Anforderungen wie Formstabilität, Verschleißfestigkeit, Unempfindlichkeit gegen aggressive Flüssigkeiten sowie Oberflächenhärte gestellt, welche durch solche spritzgussfähigen Schmelzkleber nicht erfüllt sind.

Diese spritzfähigen Schmelzkleber zeichnen sich dadurch aus, dass sie insbesondere äußerst niedrig schmelzend sind, so dass beim Umspritzen die Elektronikbauteile keinen Schaden nehmen können. Außerdem enthalten diese Schmelzkleber keine abrasiven Substanzen, durch welche beim Umspritzen der Elektronikbauteile deren Oberflächen beschädigt werden könnten. Auch ist der Druck beim Spritzgussvorgang bei solchen spritzfähigen Schmelzklebern äußerst niedrig, so dass auch hierdurch keinerlei Zerstörung des Elektronikbauteils auftreten kann.

Durch diese Vorgehensweise ist ein Hybridbauteil in einem kontinuierlichen Spritzgussverfahren herstellbar, bei welchem das Bauteil lediglich zwischen den einzelnen Verfahrensschritten in verschiedenen, aufeinanderfolgenden Spritzgussvorgängen hergestellt wird. Dies ist einerseits äußerst kostengünstig und andererseits wird ein Spritzgussteil zur Verfügung gestellt, welches die erforderlichen mechanischen Eigenschaften und gleichzeitig auch die erforderliche Dichtheit, insbesondere im Bereich des Elektronikbauteils, aufweist.

Des Weiteren ist auch ein vollständiges Umspritzen des Elektronikbauteils gewährleistet, ohne dass sich irgendwelche Lufteinschlüsse ergeben könnten, wie dies beim herkömmlichen Vergießen mit einer Vergussmasse der Fall ist.

Beim Umspritzen, insbesondere im Bereich des "Schmelzklebers" wird dieser aufgrund des höheren Druckes und der höheren Schmelztemperatur des zu umspritzenden Kunststoffes oberflächlich leicht "angeschmolzen", so dass eine Kunststoffmischung zwischen dem äußeren Kunststoff und dem Schmelzkleber entsteht.

Um das Elektronikbauteil vor unzulässigen thermischen Einflüssen zu schützen ist gemäß Anspruch 2 vorgesehen, dass die sich ausbildende Mischzone einen Abstand zum Elektronikbauteil von wenigstens 0,5 mm aufweist. Damit wird auch eine zusätzliche Dichtigkeit des gesamten Bauteiles erreicht. Aufwändiges Ausgießen oder Ansetzen von Zusatzgehäusen kann nach diesem erfindungsgemäßen Verfahren entfallen.

Anhand der Zeichnung wird nachfolgend das Verfahren zur Herstellung eines Hybridbauteiles anhand eines Ausführungsbeispiels eines Hybridbauteils näher erläutert. Es zeigt:
- Fig. 1: einen "Vorspritzling" im Vertikalschnitt, bei welchem bereits die erforderlichen, metallischen Kontaktelemente eingesetzt und umspritzt sind;
- Fig. 2: den Vorspritzling aus Fig. 1 zusammen mit einem Elektronikbauteil in perspektivischer Darstellung;
- Fig. 3: den Vorspritzling aus den Fig. 1 und 2 mit aufgesetztem, Elektronikbauteil;
- Fig. 4: den Vorspritzling mit Elektronikbauteil in einer Kavität zum Umspritzen mit Schmelzkleber im Vertikalschnitt;
- Fig. 5: die Kavität aus Fig. 4 nach Beendigung des Spritzgussvorgangs;
- Fig. 6: eine perspektivische Darstellung des nach dem Spritzgussvorgang gemäß der Fig. 4 und 5 hergestellten Zwischenproduktes;
- Fig. 7: das Zwischenprodukt aus Fig. 6 in einer weiteren Spritzgusskavität zum teilweisen Umspritzen mit herkömmlichem Kunststoff;
- Fig. 8: die Darstellung aus Fig. 7 nach dem Umspritzvorgang;
- Fig. 9: das fertige Hybridbauteil in perspektivischer Darstellung;
- Fig. 10: einen Schnitt durch eine Spritzgussform mit einem Vorspritzling bestehend aus einem Metallbauteil sowie einem Elektronikbauteil;
- Fig. 11: eine perspektivische Darstellung eines Zwischenproduktes bestehend aus den mit Schmelzkleber umspritzten in Fig.10 dargestellten Bauteilen;
- Fig. 12: eine perspektivische Darstellung des Zwischenproduktes aus Fig. 11 mit teilweise umspritztem herkömmlichen Kunststoff;
- Fig. 13: das Bauteil aus Fig. 12 mit einem fertigen angespritzten Kunststoffgehäuse in Phantomlinien.

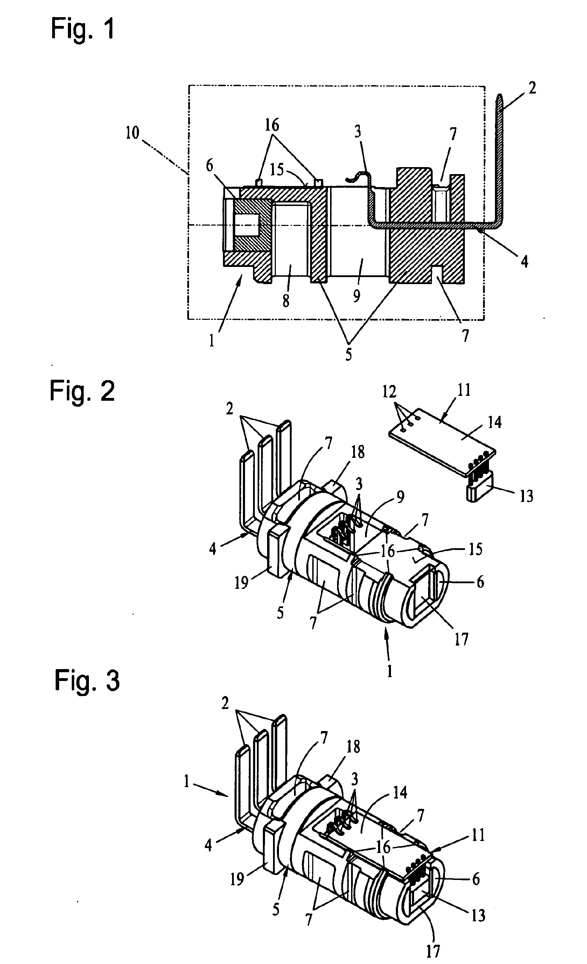

Fig. 1 zeigt einen Vertikalschnitt durch einen Vorspritzling 1, welcher beim vorliegenden Ausführungsbeispiel als Anschlussstecker ausgebildet ist. Hierzu weist der Vorspritzling 1 ein Metallbauteil 4 mit mehreren äußeren Anschlusskontakten 2 auf (Fig. 2), welche mit inneren als Anschlussfahnen ausgebildeten Anschlusselementen 3 versehen sind. Dieser Vorspritzling 1 ist in einem Spritzgussvorgang hergestellt, bei welchem das Metallbauteil 4 mit einem Kunststoffkörper 5 teilweise umspritzt wurde. Dieser Kunststoffkörper 5 bildet einen Grundkörper, welchem beim vorliegenden Ausführungsbeispiel auf der linken Seite beispielsweise noch ein metallisches Kühlelement 6 zur Kühlung eines elektronischen Bauteiles mit eingespritzt ist.

Weiter ist aus Fig. 1 erkennbar, dass dieser Grundkörper 5 mehrere Vertiefungen 7, 8 und Aussparungen 9 aufweist, so dass zur Herstellung dieses Grundkörpers 5 beim Spritzgussvorgang eine äußerst geringe Menge an Kunststoffmaterial verwendet wird. In Fig. 1 ist in Phantomlinien noch die zugehörige Spritzgussform 10 dargestellt, wie sie aus dem Stand der Technik bekannt ist.

Dieser in Fig. 1 dargestellte Vorspritzling 1 ist das Ergebnis des ersten erfindungsgemäßen Verfahrensschrittes zur Herstellung eines Hybridbauteils.

Fig. 2 zeigt diesen fertigen Vorspritzling 1 in perspektivischer Darstellung, zusammen mit einem Elektronikbauteil 11. Dieses Elektronikbauteil 11 weist beim vorliegenden Ausführungsbeispiel oberseitig drei Kontaktfelder 12 auf, welche im montierten Zustand mit den drei Anschlussfahnen 3 des Metallbauteils 4 in elektrischen Kontakt bringbar sind. An seinem rechten Ende ist dieses Elektronikbauteil 11 beispielsweise mit einem Transistor 13 versehen, welcher bereits mit der Platine 14 dieses Elektronikbauteils 11 kontaktiert ist.

Zur Aufnahme des Elektronikbauteils 11 weist der Vorspritzling 1 oberseitig eine ebene Auflagefläche 15 auf, auf welcher das Elektronikbauteil 11 mit seiner Platine 14 aufsetzbar ist. Im Randbereich dieser Auflagefläche 15 sind beim vorliegenden Ausführungsbeispiel vier Rastelemente 16 vorgesehen, mit welchen die Platine 14 beim Aufsetzen auf die Auflagefläche 15 rastend in Eingriff bringbar ist. Dabei wird die Platine 14 mit ihren Kontaktfeldern 12 unter die drei Kontaktfahnen 3 gebracht, so dass hier automatisch ein elektrischer Kontakt entsteht. Anschließend können diese Kontaktfahnen 3 mit den Kontaktfeldern 12 zusätzlich noch verlötet werden.

Beim Aufsetzen des Elektronikbauteils 11 gelangt der Transistor 13 in eine Aussparung 17 des Kühlelementes 6, wie dies aus Fig. 3 ersichtlich ist. Des Weiteren ist aus den Fig. 2 und 3 erkennbar, dass der Vorspritzling 1 in seinem linken Bereich radial vorstehende Montagestege 18 und 19 aufweist, über welche das spätere Hybridbauteil mit einem entsprechenden "Gegenstecker" rastend in Eingriff bringbar ist.

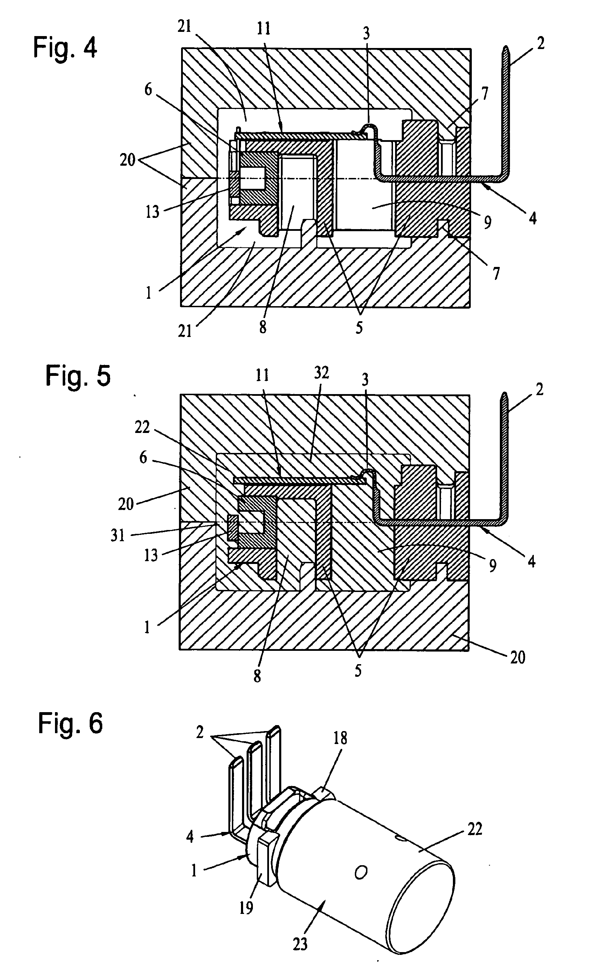

Der so mit dem Elektronikbauteil 11 versehene Vorspritzling 1 wird nun, wie dies in Fig. 4 dargestellt ist, in eine weitere Spritzgussform 20 eingebracht. Es ist erkennbar, dass die gebildete Kavität 21 den Vorspritzling, insbesondere im Bereich des Elektronikbauteils 11, umschließt und auch einen größeren radialen Abstand, insbesondere zum Elektronikbauteil 11 sowie zum Transistor 13 aufweist.

Aufgrund der vorgesehenen durchgehenden Aussparung 9 wird nun das elektronische Bauteil 11 zusammen mit dem Transistor 13 beim anschließenden Spritzvorgang mit einem spritzfähigen Schmelzkleber vollständig umspritzt. Dies ist beispielsweise aus Fig. 5 ersichtlich. Zum Umspritzen des Elektronikbauteils wird hier ein spritzfähiger Schmelzkleber verwendet, welcher mit niedriger Temperatur von ca. 200°C sowie mit äußerst niedrigem Druck in die Kavität 21 eingespritzt wird.

Das sich hieraus ergebende Zwischenprodukt 23 zeigt Fig. 6 in perspektivischer Darstellung. Es ist erkennbar, dass lediglich noch die Anschlusskontakte 2 aus den Kunststoffbereichen des Vorspritzlings 1 sowie des zylindrisch angespritzten, aus Schmelzkleber bestehenden Zylinderkörpers 22 herausragen.

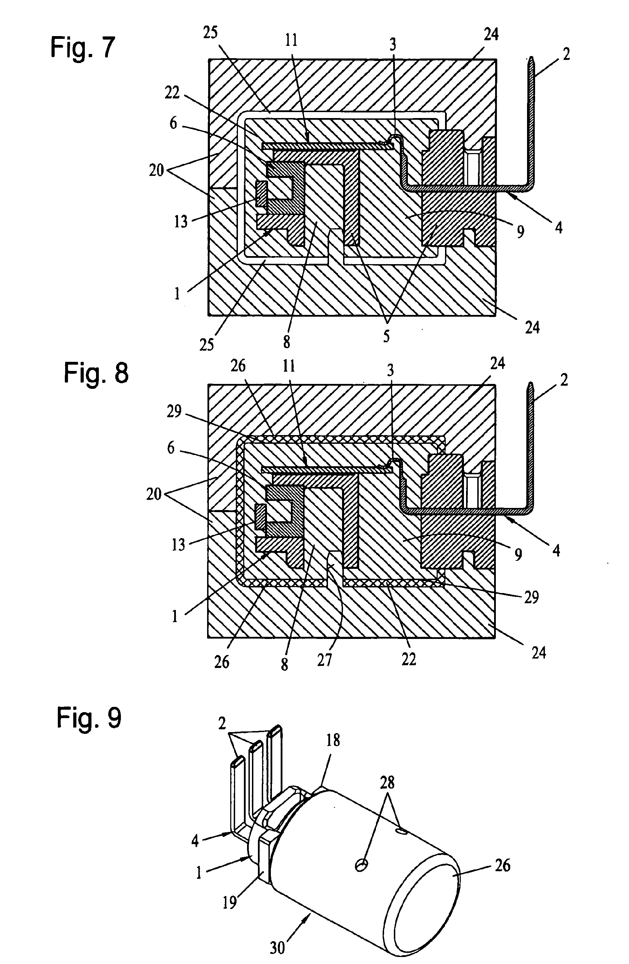

Dieses Zwischenprodukt 23 wird nun erfindungsgemäß, wie dies aus den Fig. 7 und 8 ersichtlich ist, in eine weitere Spritzgießform 24 eingebracht, welche im Bereich des Zylinderkörpers 22 um das Zwischenprodukt 23 eine umlaufenden Kavität 25 bildet. Nach dem weiteren Spritzvorgang, bei welchem ein herkömmlicher, hochschmelzender Kunststoff verwendet wird, entsteht, wie dies aus Fig. 8 ersichtlich ist, um den Zylinderkörper 22 ein Hüllkörper 26, welcher äußerst günstige mechanische Eigenschaften aufweist. Dabei können in diesen Hüllkörper 26, auch zusammen mit dem darunterliegenden, aus Schmelzkleber gespritzten Zylinderkörper 22 ein oder mehrere Einsenkungen 27 und 28 vorgesehen werden, über welche das fertige Hybridbauteil 30, wie dies in Fig. 9 in perspektivischer Darstellung erkennbar ist, beim Einbau, beispielsweise in ein Kraftfahrzeug, fixierbar ist. Dabei ist wichtig, dass diese Einsenkungen 27 und 28 auch vom Hüllkörper 26 gebildet werden, wodurch auch die erforderlichen, festen mechanischen Eigenschaften des Hybridbauteils 30 bewirkt werden.

Beim Umspritzen des aus Schmelzkleber bestehenden Zylinderkörpers 22 entsteht aufgrund der höheren Temperatur und des höheren Druckes eine Mischzone 29, in welcher eine Art Verschmelzung des entstehenden Hüllkörpers 26 und des Zylinderkörpers 22 in dessen Kontaktbereich stattfindet. Durch entsprechende Wahl des Einspritzdruckes und entsprechend guter Entlüftung der Kavität 25 sind hier äußerst kurze Einspritzzeiten erreichbar, so dass der niedriger schmelzende Schmelzkleber 22 bei diesem Umspritzen nicht zerstört wird und insbesondere die Mischzone 29 nicht das Elektronikbauteil 11 erreicht.

Um sicher auszuschließen, dass die Mischzone und die damit verbundenen thermischen Einflüsse das Elektronikbauteil 11 zerstören können, ist hier vorgesehen, dass der Schmelzkleber das Elektronikbauteil 11 zumindest mit einer "Wandstärke" von einigen Millimetern umschließt. Auch die Wandstärke des Hüllkörpers 28 kann äußerst gering gewählt werden, so dass hier auch eine schnellere Abkühlung nach dem letzten Spritzvorgang erfolgen kann und keinerlei thermische Überlastung des Elektronikbauteils erfolgen kann.

Es ist erkennbar, dass mittels des hier kurz beschriebenen, erfindungsgemäßen Verfahrens, ein Hybridbauteil 30 mit äußerst günstigen mechanischen Eigenschaften durch mehrere aufeinanderfolgende Spritzgussvorgänge herstellbar ist. Es ist kein separates Bauteil zum Aufschieben auf den Vorspritzling und anschließendes Ausgießen für den Schutz des Elektronikbauteils 11 notwendig.

Durch die Gestaltung des Vorspritzlings 1 ist eine vollständige Umspritzung des Elektronikbauteils 11 mit Schmelzkleber sichergestellt, wobei die Wandstärken, welche das Elektronikbauteil 11 wie auch den Grundkörper des Vorspritzlings zumindest bereichsweise umgeben, derart gewählt sind, dass auch beim anschließenden Umspritzen dieses Zwischenproduktes 23 nach den Fig. 7 und 8 keinerlei unzulässige thermische Belastung, insbesondere auf das Elektronikbauteil 11 und den Transistor 13 einwirken kann.

Durch die Ausbildung einer Mischzone, welche aus einem Gemenge des Schmelzklebers und des herkömmlichen Spritzgusskunststoffes besteht, wird eine absolute Dichtheit auch zwischen dem Hüllkörper 26 und dem aus Schmelzkleber bestehenden Zylinderkörper 22 erreicht, so dass nach diesem Umspritzen das Hybridbauteil 30 absolut dicht und auch gegen äußere mechanische Einflüsse geschützt ist. Als herkömmliche spritzgussfähige Kunststoffe sind hier beispielsweise teilkristalline Thermoplaste zu verstehen oder jeder andere in Temperaturbereichen ab 300° C hoch schmelzende, spritzgussfähige Kunststoff, welcher zum Spritzgießen von beispielsweise Kunststoffgehäusen verwendet wird.

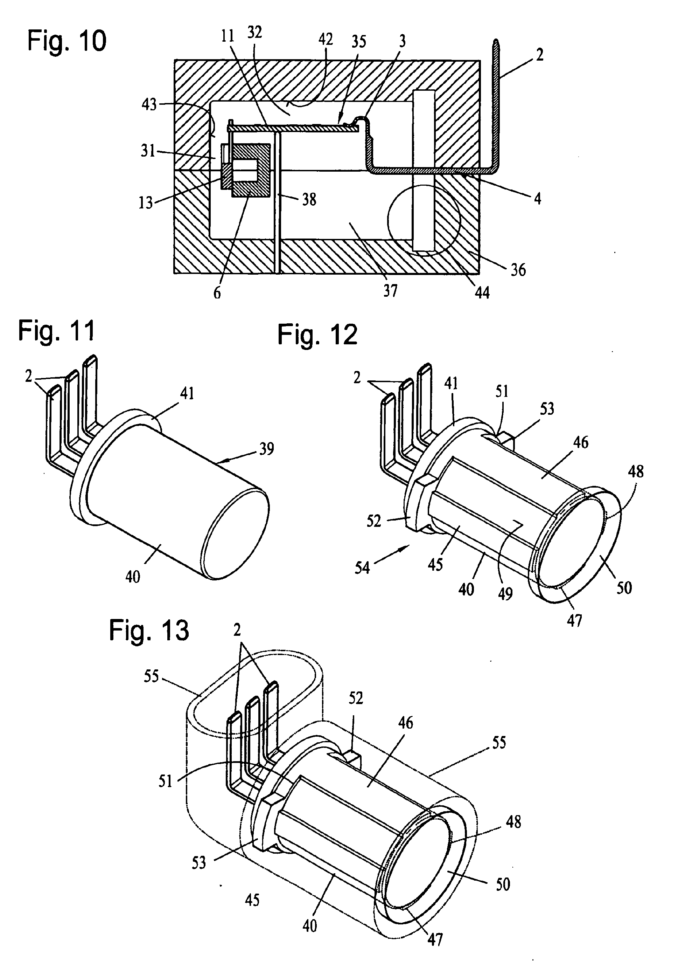

Anhand der Fig. 10 bis 13 wird der Verfahrensablauf zur Herstellung eines Hybridbauteils dargestellt, bei welchem der Vorspritzling 35 lediglich aus dem Metallbauteil 4, dem Elektronikbauteil 11 sowie dem Transistor 13 mit seinem Kühlelement 6 besteht. Dieser Vorspritzling 35 ist, wie aus Fig. 10 erkennbar ist, in eine Spritzgussform 36 eingesetzt, wobei die äußeren Anschlusskontakte 2 des Metallbauteils 4 aus der Spritzgussform 36 bzw. deren Kavität 37 herausragen. Das Elektronikbauteil 11 ist über die als Anschlussfahnen ausgebildete Anschlusselemente 3 mit dem Metallbauteil 4 elektrisch verbunden und wird innerhalb der Kavität 37 der Spritzgussform 36 durch einen Stempel 38 abgestützt, so dass dieses beim anschließenden Spritzgussvorgang in seiner vorgegebenen Position verbleibt.

Nach dem Spritzgussvorgang beim Umspritzen des Vorspritzlings 35 entsteht das in Fig. 11 dargestellte Zwischenprodukt 39, bei welchem der Vorspritzling 35 aus Fig. 10 vollständig mit Schmelzkleber umspritzt ist. Dieser Schmelzkleber bildet einen Zylinderkörper 40, in dessen im Bereich der nach außen vorstehenden Anschlusskontakte 2 liegenden Endbereich ein radial nach außen vorstehender Stützsteg 41 angespritzt ist. Aus Fig. 10 ist erkennbar, dass insbesondere das Elektronikbauteil 11 im oberen Bereich der Kavität 37 einen relativ geringen Abstand zur oberen Begrenzungswand 42 der Kavität 37 aufweist.

Auch der Transistor 13, welcher hier als Hallsensor dient, weist zur linken Seitenwand 43 der Kavität 37 einen relativ geringen Abstand auf. Dies bedeutet, dass nach dem erfolgten Spritzgussvorgang die das Elektronikbauteil 11 und den Transistor 13 umgebende Wandstärke aus Schmelzkleber nur relativ gering ist. Diese Wandstärke sollte 0,5 mm, vorzugsweise 2 mm, nicht unterschreiten, so dass sich beim nachfolgenden Umspritzvorgang des nach dem Spritzgussvorgang hergestellten Zylinderkörpers 40 aus Fig. 11 eine genügend große Pufferzone zwischen der Oberfläche dieses Zylinderkörpers 40 und den Oberflächen des Vorspritzlings 35 ergibt.

Durch diese Pufferzonen wird sicher verhindert, dass beim anschließenden Umspritzvorgang des Zylinderkörpers 40 der Schmelzkleber insbesondere im Bereich des Elektronikbauteils 11 oder im Bereich des Transistors 13 bis zu diesem Bauteil hin aufgeschmolzen wird und insbesondere dadurch eine thermische Zerstörung dieser Bauteile erfolgen könnte.

Ist es aus konstruktiven Gründen der Ausgestaltung des Zylinderkörpers 40 nicht möglich, einen solchen Mindestabstand einzuhalten, so kann erfindungsgemäß weiterhin vorgesehen sein, dass der Anguß beim Umspritzen des Zylinderkörpers 40 beispielsweise in einer Zone 44 (Fig. 10) erfolgt, in welcher die Pufferzone erheblich größer ausgebildet ist. Durch diese Maßnahme wird sichergestellt, dass beim "Umfließen" des herkömmlichen Kunststoffes um den Zylinderkörper 40 herum genau diese Zonen im Bereich des Elektronikbauteils 11 und des Transistors 13 zuletzt umspritzt werden, so dass die zeitliche thermische Einwirkung in diesen Bereichen äußerst klein ist und somit ein Aufschmelzen des Schmelzklebers bis zum Elektronikbauteil 11 bzw. zum Transistor 13 sicher verhindert wird, insbesondere eine thermische Aufheizung bis zu diesen Bauteilen hin sicher vermieden wird.

Fig. 12 zeigt das mit herkömmlichem Kunststoff bereichsweise umspritzte Bauteil bzw. dessen Zylinderkörper 40 in perspektivischer Darstellung. Es ist erkennbar, dass in diesem Falle insgesamt vier Längsstege 45, 46, 47 und 48 im Bereich der äußeren Mantelfläche 49 des Zylinderkörpers 40 angespritzt wurden. Des Weiteren wurde im rechten Endbereich eine Bodenplatte 50 und im linken Endbereich des Zylinderkörpers 40 ein Ringkörper 51 am Zylinderkörper 40 angespritzt. An diesen Ringkörper 51 sind zwei sich diametral gegenüberliegende Haltezungen 52 und 53 als einstückiger Bestandteil des Ringkörpers 51 angespritzt, welche zur weiteren Umspritzung des Zylinderkörpers 40 bzw. zu dessen Einbringen und Halterung in einer weiteren Kavität zum fertigen Umspritzen des Zylinderkörpers 40 vorgesehen sind.

Es ist erkennbar, dass der Längssteg 46 im Bereich des innen liegenden Elektronikbauteils 11 aus Fig. 10 angeordnet ist. Die Bodenplatte 50 hingegen befindet sich im Bereich des Transistors 13 aus Fig. 10. Aufgrund dieser "Vorumspritzung" des aus Schmelzkleber bestehenden Zylinderkörpers 40 wird eine äußerst geringe Spritzzeit erreicht, so dass auch die thermische Einwirkung auf den Schmelzkleber, insbesondere in den Bereichen des Elektronikbauteils 11 und des Transistors 13, äußerst gering gehalten wird. Damit wird sichergestellt, dass das Elektronikbauteil 11 sowie der Transistor 13 keinerlei Schaden nehmen kann.

Nach diesem Umspritzvorgang des Zylinderkörpers 43 zu dem Zwischenprodukt 54 aus Fig. 12, kann dann das restliche Gehäuse 55 in einem weiteren Spritzgussvorgang umspritzt werden, wie dies in Fig. 13 in Phantomlinien dargestellt ist. Dabei kann vorgesehen sein, dass bei diesem endgültigen Spritzvorgang zur Herstellung des Gehäuses 55 die Längsstege 45 bis 48 sowie die Bodenplatte 50, der Ringkörper 51 und die beiden Haltezungen 52 und 53 vollständig mit eingegossen werden und mit dem ebenfalls aus herkömmlichem Kunststoff bestehenden Gehäuse 55 eine homogene Einheit bilden. Durch die vorab angespritzten Längsstege 45 bis 48 sowie die Bodenplatte 50 wird so sicher eine thermische Beanspruchung der innen liegenden Bauteile, wie dem Elektronikbauteil 11 sowie dem Transistor 13 aus Fig. 10, verhindert.

Es kann auch vorgesehen werden, das Gehäuse 55 ohne die vorab umspritzten Längsstege 45, 46, 47 und 48 mit der Bodenplatte 50 und dem Ringkörper mit seinen beiden Haltezungen 52 und 53 in einem Spritzgussvorgang anzuspritzen. Hier ist zu beachten, dass die beiden Pufferzonen 31 und 32 eine entsprechend große Wandstärke aufweisen, um eine Aufschmelzen des Schmelzklebers bis zum Elektronikbauteil 11 bzw. zum Transistor 13 und eine erhöhte thermischen Einwirkung auf diese Bauteile 11 und 13 sicher zu verhindern.

Andererseits oder zusätzlich zu der vorgesehenen Wandstärke als Pufferzone kann auch der Anguss zum Umspritzen des Zylinderkörpers 40 in einen Bereich der entsprechenden Spritzgussform gelegt werden, welcher in größerer Entfernung zum Elektronikbauteil 11 bzw. dem Transistor 13 liegt, wie dieser in Fig. 10 mit dem Bezugszeichen 44 dargestellt ist. Dadurch wird erreicht, dass der Zylinderkörper 40 zeitlich erst am Ende des Umspritzvorganges mit herkömmlichem Kunststoff umspritzt wird, so dass die thermische Einwirkung auf den Zylinderkörper 40 in diesen Bereichen äußerst kurz gehalten wird und somit eine unzulässig hohe thermische Einwirkung in diesen Bereichen sicher verhindert wird.

Somit ist erkennbar, dass durch das erfindungsgemäße Verfahren ein Hybridbauteil in aufeinanderfolgenden Spritzgussprozessen, beispielsweise in einer Spritzgussmaschine mit einem Mehrkomponentenwerkzeug, ohne weiteren Aufwand äußerst günstig herstellbar ist.

## Patentansprüche

1. Verfahren zur Herstellung eines Hybridbauteiles (30) mit den Verfahrensschritte:
- Herstellung eines zu umspritzenden Metallbauteils (4) durch Trenn- und Biegebearbeitung;
- Einbringen des Metallbauteils (4) in eine Kavität einer Spritzgussform (10), wobei das Metallbauteil (4) mit äußeren Anschlusselementen (2) außerhalb der Kavität der Spritzgussform (10) und mit inneren Anschlusselementen (3) innerhalb der Kavität der Spritzgussform (10) angeordnet ist;
- Umspritzen des Metallbauteils (4) mit einem herkömmlichen, spritzgussfähigen Kunststoff unter Freilassung der inneren Anschlusselemente (3) zur Herstellung eines Vorspritzlings (1);
- Bestückung des Vorspritzlings (1) mit einem Elektronikbauteil (11, 13) sowie dessen Kontaktierung mit den inneren Anschlusselementen (3);
- Einbringen des Vorspritzlings (1) zusammen mit dem Elektronikbauteil (11, 13) in eine zweite, größere Kavität (21), wobei die Kavität (21) wenigstens den Umgebungsbereich des Elektronikbauteils (11) umgibt;
**gekennzeichnet durch** folgende Verfahrensschritte:
- Umspritzen des Vorspritzlings (1) zumindest im Bereich des Elektronikbauteils (11, 13) mit einem Schmelzkleber zu einem Zwischenprodukt (23);
- Einbringen des Zwischenproduktes (23) in eine dritte, größere Kavität (25);
- Umspritzen des Zwischenproduktes (23) zumindest im Bereich des von außen zugänglichen Schmelzklebers (Zylinderkörper 22) mit einem herkömmlichen spritzfähigen Kunststoff, welcher einen den Schmelzkleber schützenden Hüllkörper (26) oder das fertige Kunststoffgehäuse (55) des Hybridbauteils bildet, wobei der Kunststoff während des Spritzgussvorganges den Schmelzkleber insbesondere im Bereich der Pufferzone (31, 32) anschmilzt und mit diesem eine Mischzone (29) aus Kunststoff und Schmelzkleber bildet.

2. Verfahren nach Anspruch 1, **dadurch gekennzeichnet, dass** die Mischzone (29) einen Abstand zum Elektronikbauteil (6, 11) von wenigstens 0,5 mm aufweist.

3. Verfahren nach Anspruch 1 oder 2, **dadurch gekennzeichnet, dass** zum Umspritzen in den einzelnen Verfahrensabschnitten herkömmliche Spritzgussmaschinen verwendet werden.

4. Verfahren nach Anspruch 4, **dadurch gekennzeichnet, dass** die Spritzgussmaschine zur Durchführung der Verfahrensschritte ein Mehrkomponentenwerkzeug aufweist.

## Claims

1. Method for producing a hybrid component (30) comprising the steps of:
- producing a metal component (4) to be injected around by means of cutting and bending;
- introducing the metal component (4) into a cavity of an injection mould (10), wherein said metal component (4) is arranged with external connection elements (2) outside the cavity of the injection mould (10) and with internal connection elements (3) inside the cavity of the injection mould (10);
- extrusion coating the metal component (4) with a conventional, injection-mouldable plastic, leaving free said inner connection elements (3) for preparing a premoulding (1);
- equipping the premoulding (1) with an electronic component (11, 13) as well as contacting said premolding with the inner connection elements (3);
- introducing the premoulding (1) together with the electronic component (11, 13) into a second, larger cavity (21), said cavity (21) surrounding at least an area surrounding said electronic component (11);
**characterised by** the following method steps:
- extrusion coating the premoulding (1), at least in the area of the electronic component (11, 13) with a hot melt adhesive to form an intermediate product (23);
- introducing the intermediate product (23) into a third, larger cavity (25);
- extrusion coating the intermediate product (23) at least in the area of the hot melt adhesive (cylinder body 22), which is accessible from the outside, with a conventional injection-mouldable plastic, which forms an enveloping body (26) protecting the hot melt adhesive or the finished plastic housing (55) of the hybrid component, whereby the plastic during the injection moulding process melts on the hot melt adhesive, in particular in the region of the buffer zone (31, 32) and with the latter forms a mixing zone (29) of plastic and hot melt adhesive.

2. Method according to claim 1, **characterised in that** the mix zone (29) has a distance of at least 0.5 mm from the electronic component (6, 11).

3. Method according to claim 1 or 2, **characterised in that** conventional injection moulding machines are used for the extrusion coating in the individual method steps.

4. Method according to claim 4, **characterised in that** the injection moulding machine has a multicomponent mould for carrying out the method steps.

## Revendications

1. Procédé de fabrication d'un composant hybride (30) comprenant les étapes de procédé suivantes :
- fabrication d'un composant métallique à surmouler (4) par découpage et pliage ;
- introduction du composant métallique (4) dans une cavité d'un moule d'injection (10), le composant métallique (4) étant disposé avec des éléments de connexion extérieurs (2) à l'extérieur du moule d'injection (10) et avec des éléments de connexion intérieurs (3) à l'intérieur de la cavité du moule d'injection (10) ;
- surmoulage du composant métallique (4) avec une matière plastique conventionnelle, apte au moulage par injection, en laissant libres les éléments de connexion intérieurs (3), pour réaliser une ébauche de pièce moulée (1) ;
- équipement de l'ébauche de pièce moulée (1) avec un composant électronique (11, 13) ainsi qu'établissement de son contact avec les éléments de connexion intérieurs ;
- introduction de l'ébauche de pièce moulée (1) munie du composant électronique (11, 13) dans une deuxième cavité (21) plus grande, la cavité (21) entourant au moins la zone environnante du composant électronique (11) ;
**caractérisé par** les étapes de procédé suivantes :
- surmoulage de l'ébauche de pièce moulée (1) au moins dans la zone du composant électronique (11, 13) avec une colle thermofusible pour obtenir un produit intermédiaire (23) ;
- introduction du produit intermédiaire (23) dans une troisième cavité (25) plus grande ;
- surmoulage du produit intermédiaire (23) au moins dans la zone de la colle thermofusible accessible de l'extérieur (corps de cylindre 22) avec une matière plastique conventionnelle, apte au moulage par injection, laquelle forme un corps enveloppant (26) protégeant la colle thermofusible ou le boîtier en matière plastique (55) fini du composant hybride, la matière plastique faisant fondre la colle thermofusible pendant le processus de moulage par injection, en particulier dans la zone tampon (31, 32), et formant avec celle-ci une zone composite (29) en matière plastique et colle thermofusible.

2. Procédé selon la revendication 1, **caractérisé en ce que** la zone composite (29) présente une distance d'au moins 0,5 mm par rapport au composant électronique (6, 11).

3. Procédé selon la revendication 1 ou 2, **caractérisé en ce que** l'on utilise des machines de moulage par injection conventionnelles pour le surmoulage aux différentes étapes de procédé.

4. Procédé selon la revendication 3, **caractérisé en ce que** la machine de moulage par injection présente un moule à plusieurs composants pour réaliser les étapes du procédé.
